# EUROPEAN PATENT APPLICATION

(11) **EP 4 554 057 A1**
(43) Date of publication of application: **14.05.2025**
(21) Application number: 23209108.2
(22) Date of filing: 10.11.2023
(51) Int. Cl.: H02K 3/24, H02K 3/38, H02K 9/06, H02K 9/10

(54) **E-MACHINE STATOR COOLING**

(71) Applicant: Polestar Performance AB, 405 31 Gothenburg (SE)
(72) Inventor: STRANDEMO, Per, 433 65 Sävedalen (SE); STENVALL, Lars, 459 93 Ljungskile (SE)
(74) Representative: Zacco Sweden AB

(57) **Abstract**

An electronic traction motor, including a rotor coupled to a rotor shaft, a plurality of stator coil windings at least partially surrounding the rotor, a motor housing at least partially surrounding the stator coil windings, and a pair of air guides positioned between the respective ends of the stator coil windings and the motor housing, the pair of air guides configured to substantially fill a gap defined between the respective ends of the stator coil windings and the motor housing with an electrically insulative material to inhibit arcing, while prioritizing the flow of cooling air through the stator coil windings.

## Description

### TECHNICAL FIELD

The present disclosure relates generally to the field of electric motors, and more particularly to a novel technique for dissipating heat in a traction motor of an electric vehicle.

### BACKGROUND

Electric vehicles are becoming increasingly popular as consumers look to decrease their environmental impact and improve air quality. Instead of a traditional internal combustion engine, electric vehicles include one or more electric machines or motors (occasionally referred to herein as an "e-machine"), powered by a rechargeable traction battery. Although e-machines are recognized as generally being more energy efficient than their traditional internal combustion engine counterparts, e-machines still generate heat during use, which must be discharged through a cooling system.

Conventional e-machines typically operate at high voltages, thereby enabling efficient operation with lower current requirements, which in turn enables the production of a more compact e-machine. The use of high-voltage, however, requires greater amounts of electrical insulation to inhibit arcing. Where the e-machine includes a path for cooling airflow, the increased electrical insulation requirements demand that the airflow path have a large clearance to inhibit electrical arcing. Unfortunately, the larger clearances decrease the effectiveness of the cooling/heat transfer between the airflow and surfaces of the e-machine.

Thus, although higher operating voltages enable the production of smaller, more compact motors, the higher electrical insulation requirements negatively impact efficient cooling. The present disclosure addresses this concern.

### SUMMARY

Embodiments of the present disclosure provide an electric vehicle and e-machine including a mechanism configured to prioritize an efficient cooling airflow around the high-voltage coil windings within the e-machine, while providing a layer of arcing inhibiting electrical insulation between the high-voltage coil windings and at least a portion of the motor frame, thereby enabling the production of a more compact e-machine.

One embodiment of the present disclosure provides an electronic traction motor, including a rotor coupled to a rotor shaft, a plurality of stator coil windings at least partially surrounding the rotor, a motor housing at least partially surrounding the stator coil windings, and a pair of air guides positioned between the respective ends of the stator coil windings and the motor housing, the pair of air guides configured to substantially fill a gap defined between the respective ends of the stator coil windings and the motor housing with an electrically insulative material to inhibit arcing, while prioritizing/enabling the flow of cooling air through the stator coil windings.

In one embodiment, the pair of air guides are formed as annular rings conformed to fit around respective ends of the stator coil windings, thereby defining an air flow passageway through groups of the stator coil windings. In one embodiment, the electronic traction motor further includes a heat exchanger in fluid communication with the airflow passageway defined by the pair of air guides. In one embodiment, the gap defined between the respective ends of the stator coil windings in the motor housing is less than about 2 mm.

In one embodiment, each of the pair of air guides comprise an inner lip positionable between at least a portion of the rotor shaft and an inner surface of the stator coil windings, an end plate positionable substantially orthogonal to an axis of the rotor shaft, and an outer lip positionable between at least a portion of an outer surface of the stator coil windings and the motor frame. In one embodiment, an interface between the inner lip, end plate and outer lip are at least one of chamfered, filleted or rounded. In one embodiment, the outer lip defines a plurality of vents. In one embodiment, the pair of air guides are constructed of at least one of a polymer, resin, foam, or ceramic. In one embodiment, the electronic traction motor is configured to operate at 800-volts.

Another embodiment of the present disclosure provides an electric vehicle including, a battery pack and an electronic traction motor, the electronic traction motor comprising a rotor coupled to a rotor shaft, a plurality of stator coil windings at least partially surrounding the rotor, a motor housing at least partially surrounding the stator coil windings, and a pair of air guides positioned between the respective ends of the stator coil windings and the motor housing, the pair of air guides configured to substantially fill a gap defined between the respective ends of the stator coil windings and the motor housing with an electrically insulative material to inhibit arcing, while prioritizing the flow of cooling air through the stator coil windings.

Yet another embodiment of the present disclosure provides an electronic traction motor, including a rotor coupled to a rotor shaft, a plurality of stator coil windings at least partially surrounding the rotor, a motor housing at least partially surrounding the stator coil windings, and a pair of air guides formed as annular rings constructed of at least one of a polymer, resin, foam, or ceramic, conformed to fit around respective ends of the stator coil windings, thereby defining an air flow passageway through groups of the stator coil windings, the pair of air guides configured to substantially fill a gap defined between the respective ends of the stator coil windings and the motor housing with an electrically insulative material to inhibit arcing, while prioritizing the flow of cooling air through the stator coil windings, wherein each of the pair of air guides comprise an inner lip positionable between at least a portion of the rotor shaft and an inner surface of the stator coil windings, an end plate positionable substantially orthogonal to an axis of the rotor shaft, and an outer lip positionable between at least a portion of an outer surface of the stator coil windings and the motor frame, wherein the outer lip defines a plurality of vents, and a heat exchanger in fluid communication with the airflow passageway defined by the pair of air guides.

The summary above is not intended to describe each illustrated embodiment or every implementation of the present disclosure. The figures and the detailed description that follow more particularly exemplify these embodiments.

### BRIEF DESCRIPTION OF THE DRAWINGS

The disclosure can be more completely understood in consideration of the following detailed description of various embodiments of the disclosure, in connection with the accompanying drawings, in which:
FIG. 1 is a perspective view depicting an electric vehicle including a mechanism for enhanced cooling of a high-voltage e-machine, in accordance with an embodiment of the disclosure.
FIG. 2 is a perspective view depicting a drive unit of an electric vehicle, including an e-machine, transmission, wheel axles and associated electronics, in accordance with an embodiment of the disclosure.
FIG. 3 is a perspective view depicting an e-machine, in accordance with an embodiment of the disclosure.
FIG. 4 is a partially exploded, cut away perspective view depicting an e-machine including a mechanism for enhanced cooling, in accordance with an embodiment of the disclosure.
FIG. 5 is a cut away perspective view depicting the e-machine of FIG. 4, in accordance with an embodiment of the disclosure.
FIGS. 6A-B are perspective views of non-electrically conductive air guides, in accordance with an embodiment of the disclosure.

While embodiments of the disclosure are amenable to various modifications and alternative forms, specifics thereof shown by way of example in the drawings will be described in detail. It should be understood, however, that the intention is not to limit the disclosure to the particular embodiments described. On the contrary, the intention is to cover all modifications, equivalents, and alternatives falling within the spirit and scope of the subject matter as defined by the claims.

### DETAILED DESCRIPTION

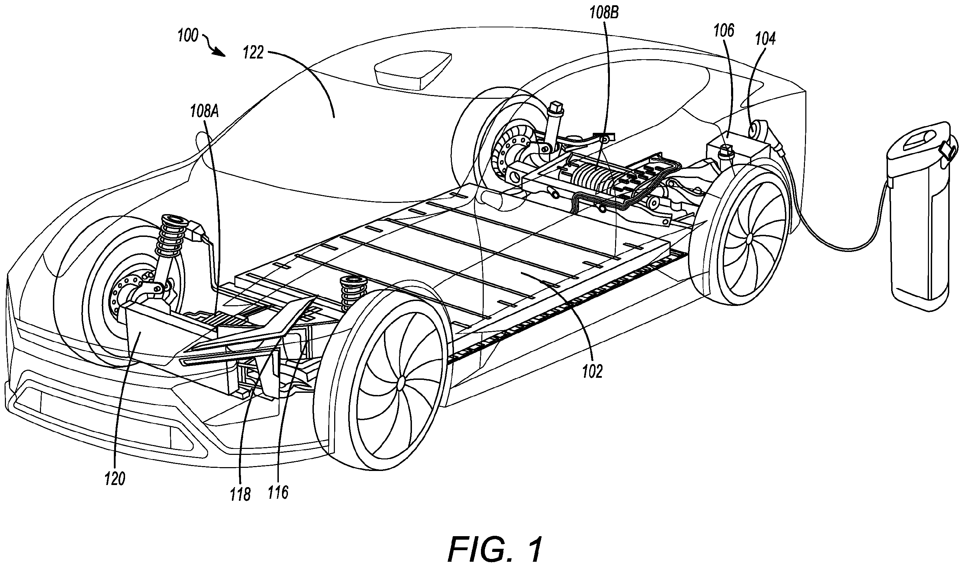

Referring to FIG. 1, a vehicle 100 including a mechanism for enhanced cooling of a high-voltage e-machine is depicted in accordance with an embodiment of the disclosure. As depicted, the vehicle 100 can be an electric vehicle, wherein the term "electric vehicle" as used herein may refer to an all-electric vehicle, also referred to as an EV, a plug-in hybrid vehicle, also referred to as a PHEV, or a hybrid vehicle, also referred to as a HEV, where a hybrid vehicle refers to a vehicle utilizing multiple propulsion sources one of which is an electric drive system.

The vehicle 100 can include a battery pack 102 configured to store electricity for use in operation of the vehicle. The terms "traction battery" or "battery pack" as used herein refer to multiple individual batteries contained within a single piece or multi-piece housing, the individual batteries electrically interconnected to achieve the desired voltage and capacity for a particular application. In some embodiments, the battery pack 102 can configured to store energy with a high electrical potential for later use (e.g., 800 VDC, 400 VDC, etc.).

The terms "battery" and "battery system" may be used interchangeably and as used herein refer to an electrical energy storage system that has the capability to be charged and discharged such as a battery, battery pack, capacitor or super-capacitor. The terms "battery," "cell," and "battery cell" may be used interchangeably and may refer to any of a variety of different cell types, chemistries and configurations including, but not limited to, lithium ion (e.g., lithium iron phosphate, lithium cobalt oxide, other lithium metal oxides, etc.), lithium ion polymer, nickel metal hydride, nickel cadmium, nickel hydrogen, nickel zinc, silver zinc, or other battery type/configurations.

In some embodiments, the vehicle 100 can include a charge port 104 configured to enable the vehicle 100 to connect to an external power supply in order to charge the battery pack 102. Additionally, the vehicle 100 can include an onboard charger 106 configured to convert incoming alternating current electricity supplied by the charge port 104 into usable direct-current power for charging the battery pack 102. In embodiments, the onboard charger 106 can also be configured to monitor characteristics of the battery pack 102 during charging, such as voltage, current, temperature and stated charge for communication to the external charging equipment.

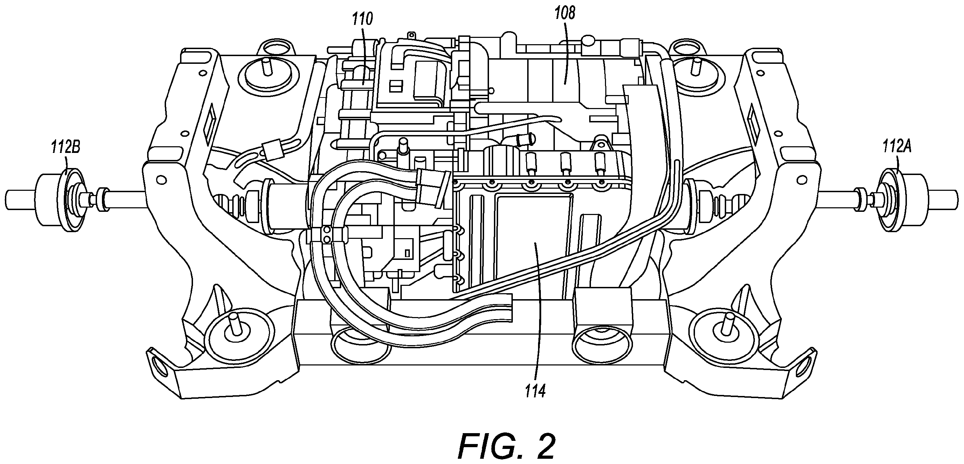

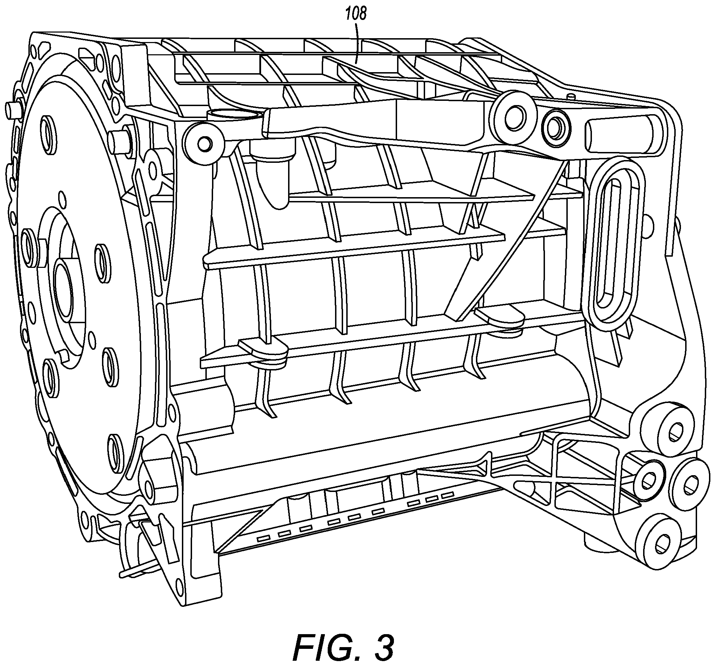

As further depicted in FIGS. 2-3, the vehicle 100 can include an e-machine 108 (alternatively referred to as an "electronic traction motor") configured to use power from the battery pack 102 to move the vehicle. Specifically, the e-machine 108 is configured to convert electrical energy stored in the battery pack 102 into a mechanical torque, which is used as an input to the drivetrain, typically via a transmission 110, which is configured to transfer mechanical power from the e-machine 108 to drive a pair of axels 1 12A-B. A power electronics controller 114 can manage the flow of electrical energy delivered by the battery pack 102, thereby controlling a speed and torque delivered by the e-machine 108.

With continued reference to FIG. 1, in some embodiments, the vehicle 100 can further include an auxiliary battery 116, which is typically a lower voltage battery pack (e.g., 12 VDC, etc.), configured to provide electricity to various vehicle accessories. A DC/DC converter 118 can be configured to convert high-voltage DC power from the battery pack 102 to the lower voltage DC power needed to run vehicle accessories and recharge the auxiliary battery 116. A thermal system 120 can be configured to maintain a proper operating temperature range of the battery pack 102, e-machine 108 and other electronics, and to regulate a temperature of air in a cabin area 122 of the vehicle 100.

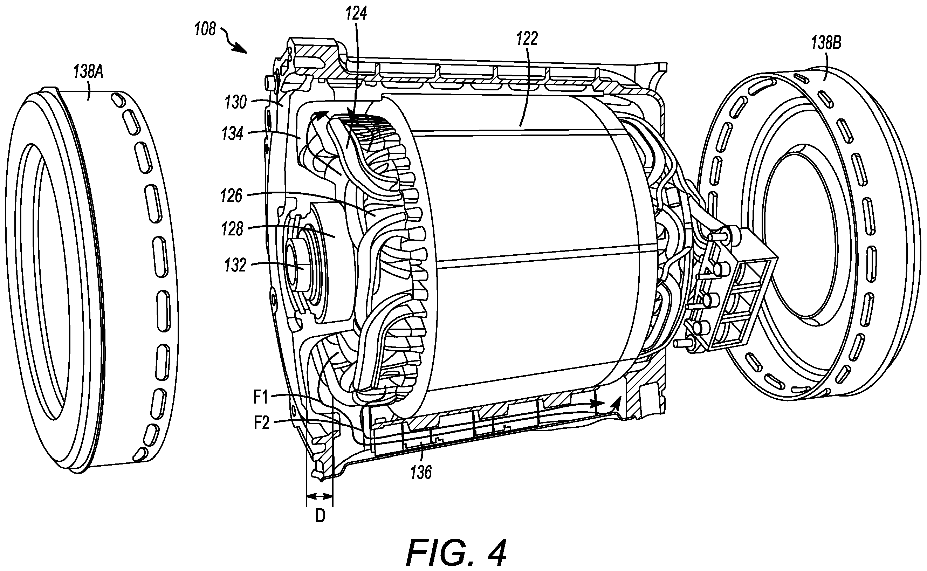

With additional reference to FIGS. 4-5, an e-machine 108 including a mechanism for enhanced cooling of a high-voltage e-machine is depicted in accordance with an embodiment of the disclosure. In embodiments, the e-machine 108 generally includes a stator 122 comprising a multiplicity of coil windings 124, surrounding a rotor 126, which is supported by bearings 128 for rotation in a motor frame 130. The coil windings are electrically interconnected to form groups, which are, in turn, interconnected in a manner that produces a magnetic field when an electrical current is run through the coil windings 124.

To induce rotation of the rotor 126, current from the battery pack 102/power electronics controller 114 is routed through the coil windings 124 disposed in the stator 122, which in turn causes the rotor 126 to rotate within the stator 122. A rotor shaft 132 extending through the motor housing takes advantage of this produced rotation and translates the movement of the rotor 126 into a driving force to power the transmission 110.

During operation, the e-machine 108 generates heat. Specifically, physical interaction of various components of the e-machine 108 produce heat due to friction. Additionally, the electrical current passing through the coil windings in the stator 122 and rotor 126 also produce heat, by way of resistance heating. For example, operating temperatures of the e-machine 108 may reach upwards towards 200°C. If left unabated, excess heat may degrade the performance of the e-machine 108. Worse yet, excess heat may contribute to any number of malfunctions.

To dissipate heat, the e-machine 108 can be equipped with a blower unit configured to pressurized ambient air and direct this air through the motor frame 130 for convective cooling of the e-machine 108. For example, the rotor shaft 132 may include a fan that forces an air flow (e.g., forced flow) to the interior of the e-machine 108, thereby convectively cooling be e-machine 108, particularly the stator 122 and the rotor 126. Typically, passageways 134 formed in and around the stator 122 and the rotor 126 route the air flow through the e-machine 108, which may be configured to ultimately route the airflow through a heat exchanger 135 of the thermal system 120.

It is usually desirable to have a high power density traction motor that is both physically compact, yet has maximum power output. Over the years, various techniques have been employed to maximize power output, such as increasing the operating voltage of the traction motor.

Operation of a traction motor at high voltages enables efficient operation with lower current requirements, which enables the production of a more compact traction motor.

However, the use of high-voltage electricity requires greater amounts of electrical insulation to inhibit arcing. Where the traction motor includes air flow passageways 134 for cooling, the increased electrical isolation requirements demand that the passageways 134 have a large clearance to inhibit electrical arcing, which conflicts with the production a more compact traction motor. In fact, a significant amount of overall structure can be dedicated to the air flow passageways 134. For example, FIG. 4 depicts a gap distance (D) of the passageway 134 between the high-voltage coil windings 124 and the motor frame 130. Accordingly, these competing design criteria (e.g., increased power density/decreased spatial requirements) must also be considered in the context of maintaining acceptable temperature for reasonable component life and thermally induced stresses.

Moreover, the larger clearances decrease the effectiveness of the cooling/heat transfer between the airflow and surfaces of the e-machine 108. Specifically, the airflow tends to affect disproportionately the areas and volumes in proximity to the airflow. Accordingly, air flow tends to affect only the areas proximately surrounding the passageways 134 through which the airflow is directed. Moreover, as the airflow has a tendency to follow the path of least resistance, the airflow may be usurped by certain passageways, as a function of the passageway profile, leaving little or no airflow to pass through the remaining passageways, thereby effectively vitiating any cooling effects the of these passages. For example, as depicted in FIG. 4, a first airflow (F1) between the high-voltage coil windings 124 and the motor frame 130 may usurp an otherwise more efficient second airflow (F2) flowing between groups of high-voltage coil windings 124.

In some cases, uneven airflow may lead to large variations in operating temperatures at various locations within the traction motor. Such variations are generally known as hotspots. Hotspots generally indicate that cooling resources are not being efficiently employed. Moreover, localized operating temperatures (e.g., hotspots), sustained over a relatively long period of time, can lead to premature malfunction of the traction motor.

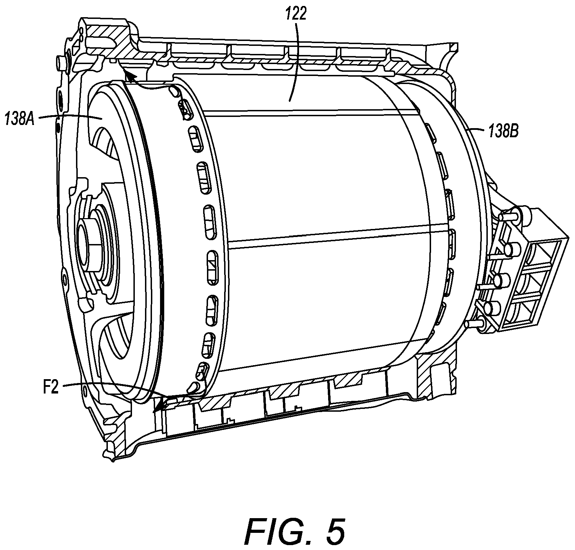

With continued reference to FIGS. 4 and 5, embodiments of the present disclosure address these issues through the introduction of one or more non-electrically conductive air guides 138A-B to guide the cooling forced air to the heat source (e.g., stator coil windings 124, etc.), while sealing off air leakage. Accordingly, embodiments of the present disclosure not only improve cooling efficiency, but also enable a smaller clearance between the high-voltage coil windings 124 and the motor frame 130, as the insulative properties of the air guides 138A-B reduce the risk of arcing.

Accordingly, in some embodiments, the non-electrically conductive air guides 138A-B can be configured to generally seal the gap distance between the high-voltage coil windings 124 and the motor frame 130, thereby inhibiting leakage of cooling air along the less efficient first airflow (F1), while prioritizing the second, more efficient airflow (F2) passageway, which can thereafter be routed to the heat exchanger 134. Moreover, by providing an insulative barrier between the high-voltage coil windings 124 and the motor frame 130, the gap distance (D) can be decreased, thereby enabling the production of a smaller, more compact e-machine 108.

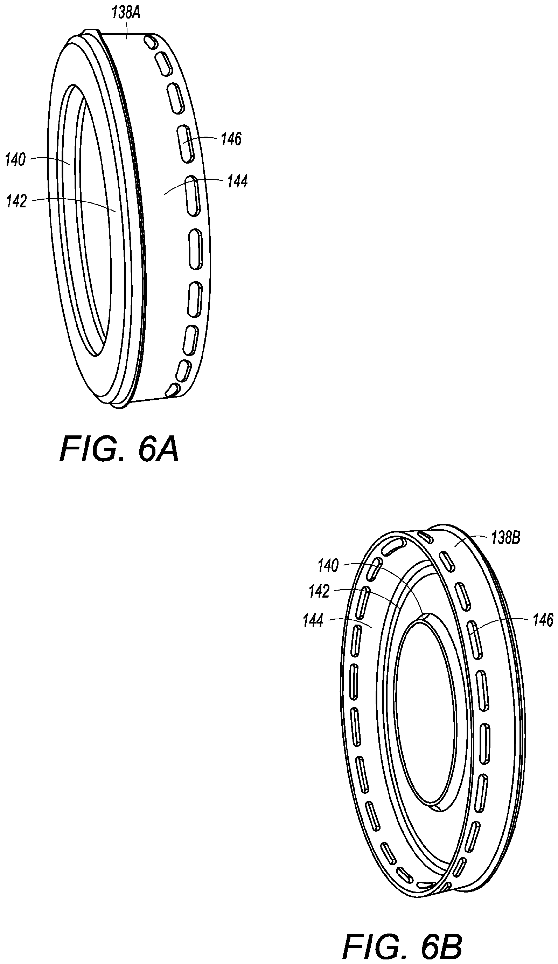

With additional reference to FIGS. 6A-B, in some embodiments, the air guides 138A-B can be an annular ring, including but not limited to partial or segmented annular ring, conformed around respective ends of the high-voltage coil windings 124, thereby providing an airflow passageway 134 through the groups of high-voltage coil windings 124 and into the heat exchanger 136. For example, in some embodiments, each of the air guides 138A-B can include an inner lip 140 (as best depicted in FIG. 6B) positionable between at least a portion of the rotor shaft 132 or bearings 128 and at least a portion of an inner surface of the high-voltage coil windings 124, an end plate 142 positionable orthogonal to an axis of the rotor shaft 132, and an outer lip 144 positionable between at least a portion of an outer surface of the high-voltage coil windings 124 and the motor frame 130. In some embodiments, a series of apertures or vents 146 can be configured to direct airflow along the desired flow path (e.g., to the heat exchanger 134).

For optimal airflow, in some embodiments, the interface between the inner lip 140, end plate 142 and outer lip 144 can be chamfered, filleted or otherwise rounded to promote ease in airflow, while minimizing pockets where stagnation of the airflow may occur. In embodiments, the air guides 138A-B can be constructed of a variety of materials having electrical insulative properties, including polymers, resins, foams, ceramics, and the like. Accordingly, the inner lip 140, end plate 142, outer lip 144, and vents 146 can cooperate to prioritize an efficient cooling airflow around the high-voltage coil windings 124, while also providing a layer of arcing inhibiting electrical insulation between the high-voltage coil windings 124 and at least a portion of the motor frame, thereby enabling the production of a more compact e-machine 108.

Various embodiments of systems, devices, and methods have been described herein. These embodiments are given only by way of example and are not intended to limit the scope of the claimed inventions. It should be appreciated, moreover, that the various features of the embodiments that have been described may be combined in various ways to produce numerous additional embodiments. Moreover, while various materials, dimensions, shapes, configurations and locations, etc. have been described for use with disclosed embodiments, others besides those disclosed may be utilized without exceeding the scope of the claimed inventions.

Persons of ordinary skill in the relevant arts will recognize that the subject matter hereof may comprise fewer features than illustrated in any individual embodiment described above. The embodiments described herein are not meant to be an exhaustive presentation of the ways in which the various features of the subject matter hereof may be combined. Accordingly, the embodiments are not mutually exclusive combinations of features; rather, the various embodiments can comprise a combination of different individual features selected from different individual embodiments, as understood by persons of ordinary skill in the art. Moreover, elements described with respect to one embodiment can be implemented in other embodiments even when not described in such embodiments unless otherwise noted.

Although a dependent claim may refer in the claims to a specific combination with one or more other claims, other embodiments can also include a combination of the dependent claim with the subject matter of each other dependent claim or a combination of one or more features with other dependent or independent claims. Such combinations are proposed herein unless it is stated that a specific combination is not intended.

Any incorporation by reference of documents above is limited such that no subject matter is incorporated that is contrary to the explicit disclosure herein. Any incorporation by reference of documents above is further limited such that no claims included in the documents are incorporated by reference herein. Any incorporation by reference of documents above is yet further limited such that any definitions provided in the documents are not incorporated by reference herein unless expressly included herein.

## Claims

1. An electronic traction motor, comprising:
a rotor coupled to a rotor shaft;
a plurality of stator coil windings at least partially surrounding the rotor;
a motor housing at least partially surrounding the stator coil windings; and
a pair of air guides positioned between the respective ends of the stator coil windings and the motor housing, the pair of air guides configured to substantially fill a gap defined between the respective ends of the stator coil windings and the motor housing with an electrically insulative material to inhibit arcing, while prioritizing the flow of cooling air through the stator coil windings.

2. The electronic traction motor of claim 1, wherein the pair of air guides are formed as annular rings conformed to fit around respective ends of the stator coil windings, thereby defining an air flow passageway through groups of the stator coil windings.

3. The electronic traction motor of any one of the claims 1 or 2, further comprising a heat exchanger in fluid communication with the airflow passageway defined by the pair of air guides.

4. The electronic traction motor of the preceding claims, wherein the gap defined between the respective ends of the stator coil windings in the motor housing is less than about 2 mm.

5. The electronic traction motor of any one of the preceding claims, wherein each of the pair of air guides comprise an inner lip positionable between at least a portion of the rotor shaft and an inner surface of the stator coil windings, an end plate positionable substantially orthogonal to an axis of the rotor shaft, and an outer lip positionable between at least a portion of an outer surface of the stator coil windings and the motor frame.

6. The electronic traction motor of claim 5, wherein an interface between the inner lip, end plate and outer lip are at least one of chamfered, filleted or rounded.

7. The electronic traction motor of claim 5 or 6, wherein the outer lip defines a plurality of vents.

8. An electric vehicle, comprising:
a battery pack; and
an electronic traction motor, the electronic traction motor comprising a rotor coupled to a rotor shaft, a plurality of stator coil windings at least partially surrounding the rotor, a motor housing at least partially surrounding the stator coil windings, and a pair of air guides positioned between the respective ends of the stator coil windings and the motor housing, the pair of air guides configured to substantially fill a gap defined between the respective ends of the stator coil windings and the motor housing with an electrically insulative material to inhibit arcing, while prioritizing the flow of cooling air through the stator coil windings.

9. The electric vehicle of claim 8, wherein the pair of air guides are formed as annular rings conformed to fit around respective ends of the stator coil windings, thereby defining an air flow passageway through groups of the stator coil windings.

10. The electric vehicle of any one of the claims 8 or 9, further comprising a heat exchanger in fluid communication with the airflow passageway defined by the pair of air guides.

11. The electric vehicle of any one of the claims 8-10, wherein the gap defined between the respective ends of the stator coil windings in the motor housing is less than about 2 mm.

12. The electric vehicle of any one of the claims 8-11, wherein each of the pair of air guides comprise an inner lip positionable between at least a portion of the rotor shaft and an inner surface of the stator coil windings, an end plate positionable substantially orthogonal to an axis of the rotor shaft, and an outer lip positionable between at least a portion of an outer surface of the stator coil windings and the motor frame.

13. The electric vehicle of claim 12, wherein an interface between the inner lip, end plate and outer lip are at least one of chamfered, filleted or rounded, preferably, the outer lip defines a plurality of vents.

14. The electric vehicle of any one of the claims 8-12, further comprising a second electronic traction motor comprising a rotor coupled to a rotor shaft, a plurality of stator coil windings at least partially surrounding the rotor, a motor housing at least partially surrounding the stator coil windings, and a pair of air guides positioned between the respective ends of the stator coil windings and the motor housing.

15. An electronic traction motor, comprising:
a rotor coupled to a rotor shaft;
a plurality of stator coil windings at least partially surrounding the rotor;
a motor housing at least partially surrounding the stator coil windings; and
a pair of air guides formed as annular rings constructed of at least one of a polymer, resin, foam, or ceramic, conformed to fit around respective ends of the stator coil windings, thereby defining an air flow passageway through groups of the stator coil windingsm the pair of air guides configured to substantially fill a gap defined between the respective ends of the stator coil windings and the motor housing with an electrically insulative material to inhibit arcing, while prioritizing the flow of cooling air through the stator coil windings, wherein each of the pair of air guides comprise an inner lip positionable between at least a portion of the rotor shaft and an inner surface of the stator coil windings, an end plate positionable substantially orthogonal to an axis of the rotor shaft, and an outer lip positionable between at least a portion of an outer surface of the stator coil windings and the motor frame, wherein the outer lip defines a plurality of vents; and
a heat exchanger in fluid communication with the airflow passageway defined by the pair of air guides.
